# EUROPÄISCHE PATENTANMELDUNG

(11) **EP 4 817 832 A1**
(43) Veröffentlichungstag der Anmeldung: **07.10.2026**
(21) Anmeldenummer: 25167793.6
(22) Anmeldetag: 01.04.2025
(51) Int. Cl.: B28D 7/02, B23Q 11/00, B23B 47/34, B23B 51/04

(54) **AUFFANGVORRICHTUNG MIT BELÜFTUNGSÖFFNUNG**

(71) Anmelder: Hilti Aktiengesellschaft, 9494 Schaan (LI)
(72) Erfinder: SPECHT, Helmut, 87660 Irsee (DE)
(74) Vertreter: Hilti Aktiengesellschaft Corporate Intellectual Property

(57) **Zusammenfassung**

Auffangvorrichtung (200) zum Auffangen von Bohrschlamm (224) oder Staub, der bei Betrieb eines Kernbohrgeräts entsteht, wobei die Auffangvorrichtung (200) folgendes aufweist:

- einen Absaugkörper (202) mit einer Bohröffnung (207), welche sich durch den Absaugkörper (202) erstreckt und dazu ausgebildet ist eine Bohrkrone aufzunehmen, wobei der Absaugkörper (202) einen Hohlraum aufweist, welcher sich zumindest teilweise um die Bohröffnung (207) erstreckt;

- eine erste Absaugöffnung (216), welche an einer Innenwand des Hohlraums angeordnet ist und dazu dient Bohrschlamm (224) oder Staub aus dem Hohlraum abzusaugen, wobei die erste Absaugöffnung (216) über einen ersten Absaugkanal mit einer Aufbereitungsvorrichtung verbindbar ist; und

- eine Belüftungsöffnung (222), welche sich durch den Absaugkörper (202) in den Hohlraum erstreckt und diesen mit der Umgebungsluft verbindet.

## Beschreibung

Die vorliegende Erfindung betrifft Auffangvorrichtung zum Auffangen von Bohrschlamm oder Staub, der bei Betrieb eines Kernbohrgeräts entsteht.

### Hintergrund der Erfindung

Im Bereich der Kernbohrgeräte sind verschiedene Vorrichtungen bekannt, um Bohrschlamm aufzufangen, der bei der Durchführung einer Kernbohrung entsteht. Beispielsweise sind Wasserfangringe bekannt, die mit mechanischen Befestigungsmitteln, wie Klemmen oder Spannmitteln, an dem Untergrund befestigt werden können. Andere Vorrichtungen werden mit Hilfe eines Unterdrucks, der von einem Sauggerät erzeugt wird, an einem Untergrund befestigt. Die mechanischen Befestigungsmittel sind allerdings mit dem Nachteil verbunden, dass sie häufig nicht zerstörungsfrei aus dem Untergrund herausgelöst werden können, so dass kleinere Beschädigungen am Untergrund nicht ausgeschlossen werden können.

Bei der Befestigung der Wasserfangringe mit Unterdruck besteht das Problem, dass der Wasserfangring nur dann an dem Untergrund befestigt und dort gehalten werden kann, wenn eine Sauganlage einer Wasseraufbereitungsvorrichtung eingeschaltet und in Betrieb ist. Allerdings ist ein Dauerbetrieb der Sauganlage zur Durchführung der Kernbohrung nicht erforderlich und Sauggeräte verbrauchen gerade im Leerlauf besonders viel elektrische Energie. Dieser Nachteil wiegt umso schwerer, wenn akkubetriebene Sauggeräte zum Einsatz kommen, die aufgrund ihrer Versorgung mit elektrischer Energie durch Batterien oder dergleichen nur über eine limitierte Menge an Bord-Energie verfügen. Aber auch wenn netzbetriebene Wasseraufbereitungsvorrichtungen verwendet werden, führt die Befestigung von konventionellen Wasserfangringen mittels eines Sauggeräts zu einem unnötig hohen Energieverbrauch. Außerdem kann ein Dauerbetrieb der Wasseraufbereitungsvorrichtung zu einer erhöhten Lärmbelastung auf einer Baustelle führen.

Durch den zum Anhaften der bekannten Wasserfangringe benötigten Unterdruck, sind lediglich geringe Luftströme innerhalb der Saugkanäle möglich. Hierdurch verschlechtert sich einerseits die Absaugung von Bohrschlamm bzw. Staub. Andererseits wird durch die geringen Luftströme die maximal mögliche Ansaughöhe reduziert.

Auf Grundlage der oben genannten Problemstellung ist es eine Aufgabe der vorliegenden Erfindung, eine Auffangvorrichtung anzugeben die energieeffizient mit einem akkubetriebenen Sauggerät zusammen verwendet wird, um Bohrschlamm aus dem Arbeitsbereich eines Kernbohrgeräts zu entfernen. Durch die erfindungsgemäße Auffangvorrichtung sollen insbesondere auf einfache Weise hohe Luftströme zum Absaugen von Bohrschlamm und Staub erzielt und höhere Ansaughöhen ermöglicht werden.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

Demgemäß betrifft die vorliegende Erfindung eine Auffangvorrichtung zum Auffangen von Bohrschlamm oder Staub, der bei Betrieb eines Kernbohrgeräts entsteht, wobei die Auffangvorrichtung folgendes aufweist:
- einen Absaugkörper mit einer Bohröffnung, welche sich durch den Absaugkörper erstreckt und dazu ausgebildet ist eine Bohrkrone aufzunehmen, wobei der Absaugkörper einen Hohlraum aufweist, welcher sich zumindest teilweise um die Bohröffnung erstreckt;
- eine erste Absaugöffnung, welche an einer Innenwand des Hohlraums angeordnet ist und dazu dient Bohrschlamm oder Staub aus dem Hohlraum abzusaugen, wobei die Absaugöffnung über einen ersten Absaugkanal mit einer Aufbereitungsvorrichtung verbindbar ist; und
- eine Belüftungsöffnung, welche sich durch den Absaugkörper in den Hohlraum erstreckt und diesen mit der Umgebungsluft verbindet.

Die Vorteile der erfindungsgemäßen Auffangvorrichtung liegen auf der Hand. So wird durch die Belüftungsöffnung ein Unterdruck innerhalb des Absaugkörpers vermindert/verhindert. Luft sowie auch Bohrschlamm oder Staub innerhalb der Hohlkammer kann dadurch wesentlich besser abgesaugt und an eine korrespondierende Aufbereitungsvorrichtung gefördert werden. Mit anderen Worten dient die Lüftungsöffnung zum Druckausgleich gegenüber dem Unterdruck, welcher durch die Pumpe der Aufbereitungsvorrichtung erzeugt wird. Durch die Vermeidung bzw. Reduzierung des Unterdrucks innerhalb des Absaugkörpers wird die Fluid-Strömungsgeschwindigkeit vom Absaugkörper zur Aufbereitungsvorrichtung erhöht. Hierdurch können auch größere Ansaug-Höhen überwunden werden, sodass die erfindungsgemäße Auffangvorrichtung in generell jeder Position, wie beispielsweise am Boden, einer Wand oder einer Decke, verwendet werden kann. Es sei an dieser Stelle erwähnt, dass der Begriff "Belüftungsöffnung" generell jede Öffnung (z.B. Spalt oder Durchgangsbohrung) bezeichnet, welche einen bewussten Eintrag von Luft in das Innere des Absaugkörpers ermöglicht. Dagegen sind Dichtungen, welche konstruktiv bedingt einen minimalen Luftstrom in das Innere des Absaugkörpers zulassen, nicht als Lüftungsöffnungen im Sinne der Erfindung zu verstehen.

Gemäß einer weiteren Ausführungsform ist die Belüftungsöffnung als eine zweite Absaugöffnung ausgebildet, die dazu dient Bohrschlamm oder Staub aus dem Hohlraum abzusaugen, wobei die zweite Absaugöffnung über einen zweiten Absaugkanal mit einer Aufbereitungsvorrichtung verbindbar ist. Gemäß dieser Ausführungsform kann die Belüftungsöffnung alternativ auch zum Absaugen von Bohrschlamm aus dem Hohlraum des Absaugkörpers verwendet werden. Dies hat den Vorteil, dass der Benutzer den Saugschlauch der Aufbereitungsvorrichtung an zwei Stellen der Auffangvorrichtung anbringen kann, um den Bohrschlamm abzusaugen. Besonders an schwer zugänglichen Stellen kann dies vorteilhaft sein, da in derartigen Fällen häufig eine der Absaugöffnungen nicht frei zugänglich ist. Darüber hinaus kann durch die zweite Absaugöffnung sichergestellt werden, dass bei jeder Positionierung der Auffangvorrichtung der Bohrschlamm unterhalb des Hohlraums abgesaugt wird. Mit anderen Worten, durch die zusätzliche Absaugöffnung kann der Bohrschlamm in jeder Position der Auffangvorrichtung nach unten, in Richtung der Schwerkraft, abgesaugt werden.

Gemäß einer weiteren Ausführungsform weist der Absaugkörper einen ersten Saugstutzen auf, welcher dazu dient, einen Saugschlauch einer Aufbereitungsvorrichtung anzuschließen, wobei der erste Saugstutzen strömungstechnisch mit dem ersten Absaugkanal verbunden ist. Der Saugstutzen bietet eine schnelle und einfache Möglichkeit, die erfindungsgemäße Auffangvorrichtung mit einer Aufbereitungsvorrichtung zu verbinden. Hierzu muss lediglich der Saugschlauch auf den Saugstutzen aufgesteckt werden. Auch ein Wechsel der Aufbereitungsvorrichtung ist hierdurch schnell und einfach möglich. Die Auffangvorrichtung ist demnach mit einer Vielzahl unterschiedlicher Aufbereitungsvorrichtungen kompatibel.

Gemäß einer weiteren Ausführungsform weist der Absaugkörper einen zweiten Saugstutzen auf, welcher dazu dient, einen Saugschlauch einer Aufbereitungsvorrichtung anzuschließen, wobei der zweite Saugstutzen strömungstechnisch mit dem zweiten Absaugkanal verbunden ist.

Gemäß einer weiteren Ausführungsform ist der erste Saugstutzen in seiner Form im Wesentlichen identisch zur Form des zweiten Saugstutzens ausgebildet. Durch die identische Ausbildung der beiden Saugstutzen können diese problemlos mit demselben Saugschlauch verbunden werden. Darüber hinaus werden Kosten bei der Herstellung der Saugstutzen reduziert. Schließlich wird durch die im Wesentlichen identische Ausbildung der beiden Saugstutzen ermöglicht, dass die Sogwirkung der Pumpe der Aufbereitungsvorrichtung an beiden Saugstutzen im Wesentlichen identisch ist. Bohrschlamm kann dementsprechend über beide Absaugöffnungen schnell und zuverlässig aus dem Hohlraum des Absaugkörpers entfernt werden.

Gemäß einer weiteren Ausführungsform ist die Belüftungsöffnung selektiv zwischen einem geöffneten Zustand und einem geschlossenen Zustand überführbar. Durch ein selektives Öffnen bzw. Schließen der Belüftungsöffnung ist es einerseits möglich, die Auffangvorrichtung selbstansaugend auszugestalten, wenn die Belüftungsöffnung geschlossen ist. Im geschlossenen Zustand der Belüftungsöffnung arbeitet die Auffangvorrichtung wie eine aus dem Stand der Technik bekannte Auffangvorrichtung, welche sich über den Unterdruck im Hohlraum des Absaugkörpers an die zu bearbeitende Oberfläche ansaugt. Dies ist insbesondere bei Wand oder Deckenbohrungen hilfreich. Auch ist es bei Wand- oder Deckenbohrungen häufig nicht notwendig einen hohen Luftstrom innerhalb des Hohlraums bzw. des Absaugkanals bereitzustellen, da einerseits Bohrschlamm mithilfe der Schwerkraft abgesaugt werden kann und, andererseits, keine Ansaughöhe überwunden werden muss. Wird die Auffangvorrichtung am Boden verwendet, so kann die Belüftungsöffnung geöffnet werden, um ausreichende Saugströme zu erzielen. Dies dient insbesondere dazu, die oben erwähnte Ansaughöhe zur Aufbereitungsvorrichtung zu überwinden und den Bohrschlamm entgegen der Schwerkraft an die Aufbereitungsvorrichtung zu fördern. Schließlich kann durch die abschließbar ausgebildete Lüftungsöffnung sichergestellt werden, dass Bohrschlamm beim Arbeiten über Kopf nicht aus dem Hohlraum entweichen kann.

Gemäß einer weiteren Ausführungsform weist die Auffangvorrichtung eine vorzugsweise abnehmbare Abdeckung auf, welche dazu ausgebildet ist, die Belüftungsöffnung zwischen dem geöffneten und dem geschlossenen Zustand zu überführen.

Gemäß einer weiteren Ausführungsform weist die Belüftungsöffnung ein Einwegventil auf, welches ein Einströmen von Fluiden in den Hohlraum ermöglicht und ein Ausströmen von Fluiden aus dem Hohlraum verhindert. Das Einwegventil verhindert beim Arbeiten über Kopf bzw. an den Wänden, dass Bohrschlamm über die Belüftungsöffnung aus dem Hohlraum des Absaugkörpers heraustritt und auf den Boden tropft. Gleichzeitig ermöglicht das Einwegventil, das Ansaugen von Umgebungsluft, auch wenn die Auffangvorrichtung an einer Decke montiert ist.

Gemäß einer weiteren Ausführungsform ist das Einwegventil Teil der Abdeckung. Durch die Ausbildung des Einwegventils als Teil der Abdeckung, ist es möglich, das Einwegventil selektiv mit der Belüftungsöffnung zu verbinden. Wie dies später näher erläutert werden wird kann hierdurch nicht nur die Absaugöffnung, sondern auch die Belüftungsöffnung zum Absaugen von Bohrschlamm verwendet werden. In dieser Ausführungsform werden zwei Abdeckungen vorgesehen, welche beide ein Einwegventil aufweisen. Die erste Abdeckung kann zum Abdecken der Absaugöffnung verwendet werden, während die zweite Abdeckung zum Abdecken der Belüftungsöffnung (d.h. zweite Absaugöffnung) dient, wenn die Belüftungsöffnung als alternative Ansaugöffnung ausgebildet ist.

Gemäß einer weiteren Ausführungsform ist die erste Absaugöffnung als eine alternative, zweite Belüftungsöffnung ausgebildet, welche sich durch den Absaugkörper in den Hohlraum erstreckt und diesen mit der Umgebungsluft verbindet. Gemäß dieses Ausführungsbeispiels ist es auch dann möglich Umgebungsluft in dem Hohlraum des Abwehrkörpers einzusaugen, wenn die erste Belüftungsöffnung als Absaugöffnung zum Absaugen von Bohrschlamm verwendet wird. Somit ist eine Belüftung in jeder Konfiguration der erfindungsgemäßen Auffangvorrichtung gewährleistet. Alternativ ist es selbstverständlich auch denkbar, die Belüftungsöffnung an einer Seitenwand des Absaugkörpers vorzusehen.

Gemäß einer weiteren Ausführungsform ist die Belüftungsöffnung auf einer der zu bearbeitenden Oberfläche abgewandten Seite der Auffangvorrichtung angeordnet.

Gemäß einer weiteren Ausführungsform weist die Auffangvorrichtung eine Unterseite, welche mit der zu bearbeitenden Oberfläche verbindbar ist, und eine Oberseite, welche der Unterseite gegenüberliegt, auf, wobei die Auffangvorrichtung wenigstens eine Seitenwand aufweist, welche die Oberseite mit der Unterseite verbindet, und wobei die erste Absaugöffnung in der Seitenwand vorgesehen ist. Selbstverständlich ist es auch möglich, die erste Absaugöffnung an der Oberseite des Absaugkörpers vorzusehen. Es ist besonders vorteilhaft, die Belüftungsöffnung und die erste Ansaugöffnung an unterschiedlichen Oberflächen der Auffangvorrichtung vorzusehen. Dabei können die Belüftungsöffnung und die Absaugöffnung senkrecht zueinander ausgerichtet sein. Dies hat den Vorteil, dass eine der beiden Öffnungen in jeder Position der Auffangvorrichtung als Absaugöffnung verwendet werden kann, während die jeweils andere Öffnung als Belüftungsöffnung dient.

Gemäß einer weiteren Ausführungsform weist die Auffangvorrichtung wenigstens einen Ansaugkörper auf, welcher mit dem Absaugkörper verbunden und dazu ausgebildet ist einen Vakuumraum zusammen mit einer Oberfläche auszubilden, wobei der Vakuumraum des Ansaugkörpers strömungstechnisch vom Hohlraum des Absaugkörpers getrennt ist.

Gemäß einer weiteren Ausführungsform ist der Absaugkörper im Wesentlichen ringförmig ausgebildet.

Gemäß einer weiteren Ausführungsform weist der Absaugkörper eine Dichtung zum Abdichten des Hohlraums gegenüber der Oberfläche auf.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Kernbohrsystems mit Auffangvorrichtung;
- Fig. 2: eine schematische Schnittdarstellung einer Auffangvorrichtung gemäß einer Ausführungsform der vorliegenden Erfindung während einer Kernbohrung am Boden;
- Fig. 3A: eine schematische Schnittdarstellung einer Auffangvorrichtung gemäß einer Ausführungsform der vorliegenden Erfindung während einer Überkopfbohrung;
- Fig. 3B: eine schematische Schnittdarstellung der Auffangvorrichtung gemäß Fig. 3A während einer Wandbohrung;
- Fig. 4: eine schematische Schnittdarstellung einer Auffangvorrichtung gemäß einer Ausführungsform der vorliegenden Erfindung während einer Überkopfbohrung;
- Fig. 5A: eine schematische Schnittdarstellung einer Auffangvorrichtung gemäß einer Ausführungsform der vorliegenden Erfindung während einer Überkopfbohrung;
- Fig. 5B: eine schematische Schnittdarstellung der Auffangvorrichtung gemäß Fig. 5A während einer Wandbohrung;
- Fig. 6: eine perspektivische Draufsicht auf ein Kernbohrsystem mit Auffangvorrichtung nach einer Ausführungsform der vorliegenden Erfindung.

### Detaillierte Beschreibung

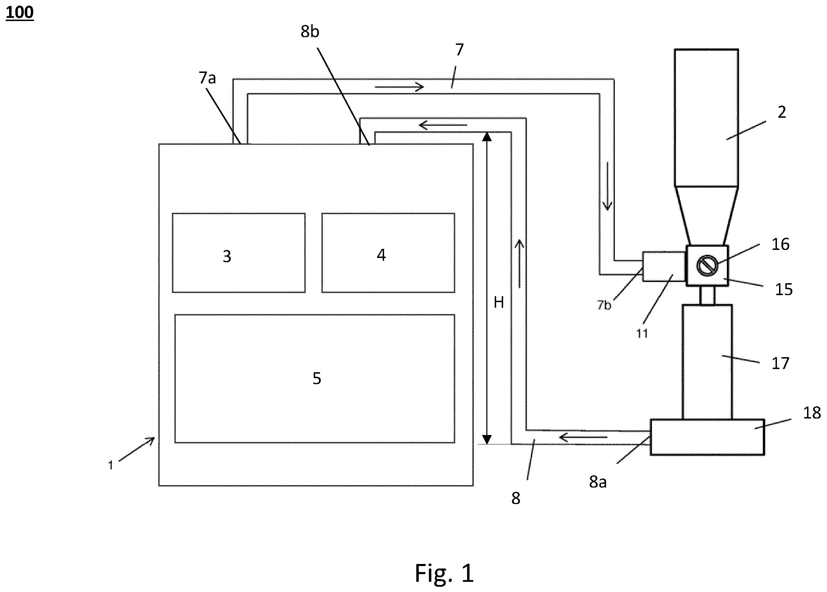

Fig. 1 zeigt ein Kernbohrsystem 100. Das Kernbohrsystem 100 weist eine als Wasseraufbereitungsanlage ausgestaltete Aufbereitungsvorrichtung 1 auf, welche mit einer als Kernbohrmaschine ausgestalteten Werkzeugmaschine 2 verbunden ist. Die Kernbohrmaschine 2 ist mit einem als Bohrkrone ausgestalteten Werkzeug 17 verbunden. Die als Wasseraufbereitungsanlage ausgestaltete Aufbereitungsvorrichtung 1 ist dazu ausgebildet Kühlwasser am Werkzeug bereitzustellen und verbrauchtes Kühlwasser/Bohrschlamm abzusaugen und zu reinigen.

Die Wasseraufbereitungsanlage 1 enthält im Wesentlichen ein Gehäuse, einen Wasserspeicher 5, einen Bohrschlammspeicher, einen Filter 4, eine erste Leitung 7, eine zweite Leitung 8, eine Pumpeneinrichtung 3 und eine Steuerungseinrichtung.

Das Gehäuse ist im Wesentlichen als Hohlkörper ausgestaltet. Darüber hinaus enthält das Gehäuse an einer Außenseite eine Schnittstelle zur Versorgung mit elektrischer Spannung, bspw. eine Batterieaufnahme. In dem Gehäuse ist sowohl der Wasserspeicher 5Als auch der Bohrschlammspeicher positioniert. Der Wasserspeicher 5 dient dazu einen Vorrat an Frischwasser zum Kühlen und Spülen aufzubewahren.

Der Bohrschlammspeicher ist im Wesentlichen in Form eines zylindrischen Behälters ausgestaltet. Die Seitenwände sowie der Boden sind als Filter 4 ausgebildet und bestehen daher aus einen filterartigen Material, welches dazu geeignet ist, den Bohrschlamm zurückzuhalten und lediglich Wasser durchdringen zu lassen. Der Bohrschlammspeicher und der Wasserspeicher 5 sind insbesondere so zueinander positioniert, dass das Wasser, welches aus dem Filter 4 des Bohrschlammspeichers austritt, in dem Wasserspeicher 5Aufgefangen wird.

Die erste Leitung 7 ist in Form eines flexiblen Schlauchs ausgestaltet und enthält ein erstes Ende 7a sowie ein zweites Ende 7b. Das erste Ende 7a der ersten Leitung 7 ist mit dem Wasserspeicher 5 verbunden. Das zweite Ende 7b der ersten Leitung 7 ist mit einem Verbindungsstück 15An der Kernbohrmaschine 2 verbunden. Das Verbindungsstück 15 enthält ein Ventil 16, mit dem der Durchfluss durch die erste Leitung 7 geöffnet und geschlossen werden kann. Die geöffnete Stellung des Ventils 16 dient dazu, dass Wasser durch die erste Leitung 7 zu dem als Bohrkrone ausgestalteten Werkzeug 17 gelangen kann. Die geschlossene Stellung des Ventils 16 dient dazu, dass kein Wasser durch die erste Leitung 7 zu der Bohrkrone 17 gelangen kann.

Die erste Leitung 7 dient zum Transport von Frischwasser aus dem Wasserspeicher 4 zu der Bohrkrone 17. Wie in Fig. 1 gezeigt, ist die erste Leitung 7 so über das Verbindungsstück 15 mit der Kernbohrmaschine 2 verbunden, dass das Wasser in das Innere der Bohrkrone 17 gelangt. Das Wasser kühlt und spült die Bohrkrone 17 während eines Bohrvorgangs. Entsprechend einer alternativen Ausgestaltung kann auch vorgesehen sein, dass die erste Leitung 7 zuerst zur Kühlung durch die Kernbohrmaschine 2 geführt wird, bevor es schließlich zum Kühlen und Spülen in die Bohrkrone 17 gelangt.

Die zweite Leitung 8 ist ebenfalls in Form eines flexiblen Schlauchs ausgestaltet und enthält ein erstes Ende 8a und ein zweites Ende 8b. Das erste Ende 8a der zweiten Leitung 8 ist mit einer Auffangvorrichtung 18 verbunden. Die Auffangvorrichtung 18 ist an dem Ende der Bohrkrone 17 positioniert und dient dazu den beim Bohrvorgang anfallenden Bohrschlamm (Gesteine, Staub und Wasser) aufzufangen. Das zweite Ende 8b der zweiten Leitung 8 ist so mit dem Bohrschlammspeicher verbunden, dass der Bohrschlamm über die zweite Leitung 8 von der Auffangvorrichtung 18 in den Bohrschlammspeicher gelangen kann.

Die Pumpeneinrichtung 3 enthält einen ersten Pumpenabschnitt und einen zweiten Pumpenabschnitt. Der erste Pumpenabschnitt ist mit der ersten Leitung 7 verbunden und dient dazu, Frischwasser aus dem Wasserspeicher 4 zu der Bohrkrone 17 zu fördern bzw. zu pumpen. Der zweite Pumpenabschnitt ist mit der zweiten Leitung 8 verbunden und dient dazu, Bohrschlamm aus der Auffangvorrichtung 18 in den Bohrschlammspeicher zu fördern bzw. zu pumpen.

Die Auffangvorrichtung 18 kann einerseits am Boden angeordnet werden. In diesem Fall ist es nicht notwendig, die Auffangvorrichtung am Untergrund zu befestigen. Jedoch ist es bei Bohrungen am Boden in der Regel notwendig, eine Ansaughöhe H, bspw. zwischen der Auffangvorrichtung und einem Einlass der Aufbereitungsvorrichtung, zu überwinden. Hierzu ist ein hoher Saugstrom notwendig.

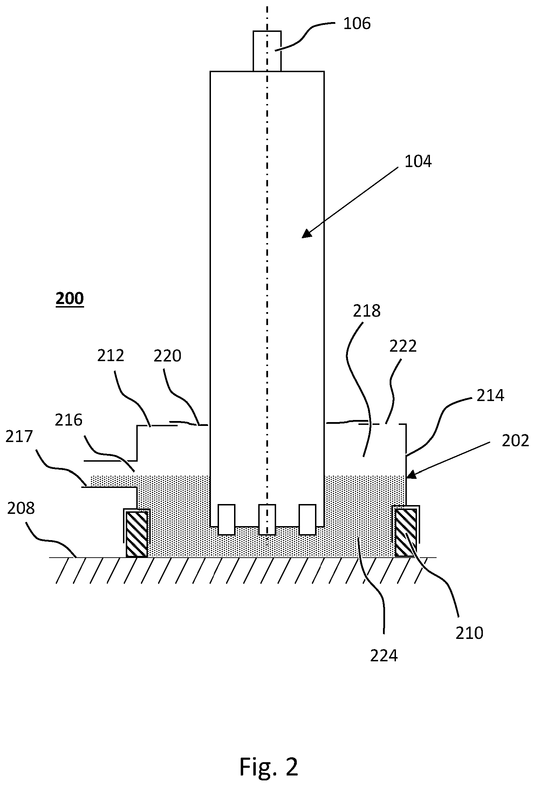

Die Figur 2 zeigt eine schematische Schnittdarstellung eines Kembohrsystems mit einer Kernbohrkrone 104 und einer Auffangvorrichtung 200 gemäß einer Ausführungsform der vorliegenden Erfindung. In der in Figur 2 dargestellten Ausführungsform ist die Auffangvorrichtung 200, insbesondere auf dem zu bearbeitende Untergrund, d. h. dem Boden 208, angebracht. Die Auffangvorrichtung 200 weist einen Absaugkörper 202 auf. Der Absaugkörper 202 weist an einem dem Boden 208 zugewandten, ersten Ende (Unterseite) eine Dichtung 210, beispielsweise eine Ringdichtung, auf, welche dazu dient, einen Hohlraum 218 innerhalb der Auffangvorrichtung 200 gegenüber dem Untergrund 208 abzudichten.

Ein als Bohrkrone 104 ausgestaltetes Werkzeug erstreckt sich in den Hohlraum 218 des Absaugkörpers 202. Insbesondere erstreckt sich die Bohrkrone 104 durch ein zweites Ende 212 (Oberseite) des Absaugkörpers 200 in den Hohlraum 218. Das zweite Ende 212 ist gegenüberliegend vom ersten Ende des Absaugkörpers 202 angeordnet. Auf der Oberseite, d. h. am zweiten Ende 212 des Absaugkörpers 202, ist eine Bohröffnung angebracht, durch welche sich die Bohrkrone 104 in den Hohlraum 218 erstrecken kann. Die Bohrkrone 104 erstreckt sich dabei durch eine Dichtung 220, welche die Bohröffnung des zweiten Endes 212 gegenüber dem Außendurchmesser der Bohrkrone 104 abdichtet, um ein Herauslaufen von Bohrwasser aus dem Hohlraum 218, über die Bohröffnung, zu verhindern.

Die Auffangvorrichtung 200 weist eine Seitenwand 214 auf, welche das erste Ende mit dem zweiten Ende 212 verbindet. Da die Auffangvorrichtung 200 in der hier dargestellten Ausführungsform ringförmig ausgebildet ist, handelt es sich bei der Seitenwand 214 um eine ringförmige Seitenwand. An der Seitenwand 214 ist eine erste Absaugöffnung 216 vorgesehen. Diese erstreckt sich durch die Seitenwand 214 in den Hohlraum 218 und dient dazu, Wasser bzw. Bohrschlamm 224 (oder Staub bei Trockenbohrungen) aus dem Hohlraum 218 abzusaugen.

Die erste Absaugöffnung 216 ist über einen Absaugkanal mit einer Aufbereitungsvorrichtung, wie diese beispielsweise in Figur 1 schematisch dargestellt ist, verbindbar. In der in Figur 2 dargestellten Ausführungsform ist der Absaugkanal an seinem dem Hohlraum 218 abgewandten Ende als Saugstutzen 217 ausgebildet. Der Saugstutzen 217 dient dazu, im Betrieb einen Saugschlauch anzuschließen und diesen, an einem gegenüberliegenden Ende, mit der Aufbereitungsvorrichtung zu verbinden. Es ist auch denkbar, dass der Absaugkanal Teil einer Aufbereitungsvorrichtung ist und kein separater Saugschlauch notwendig ist.

Wie dies in Figur 2 schematisch dargestellt ist, wird Bohr- bzw. Kühlwasser über einen nur schematisch dargestellten Anschluss 106 in das Innere der Bohrkrone 104 eingebracht. Über die Bohrkrone 104 kann das Bohr- bzw. Kühlwasser an die zu bearbeitende Oberfläche (hier Boden 208) gefördert werden. Das verbrauchte Wasser, d. h. der Bohrschlamm 224 sammelt sich im Hohlraum 218 der Auffangvorrichtung 200. Der Bohrschlamm 224 kann über die erste Absaugöffnung 216 aus dem Hohlraum 218 entfernt werden.

Die aus dem Stand der Technik bekannten Auffangvorrichtungen weisen einen abgedichteten Hohlraum 218 auf. Hierdurch kann ein Unterdruck im Hohlraum erzeugt werden, welcher es ermöglicht, die bekannten Auffangvorrichtung an den zu bearbeitenden Untergrund anzusaugen. Es wurde jedoch festgestellt, dass ein derartig abgedichteter Hohlraum 218 zwar zur Erzeugung eines Unterdrucks dient, dieser jedoch den Absaugstrom derart reduziert, dass häufig unzureichende Strömungswerte erzielt werden. Insbesondere können die in Figur 1 dargestellten Ansaughöhen H häufig nicht erzielt werden, wenn die bekannten Wasserfangringe am Boden verwendet werden.

Aus den oben genannten Gründen weist die Auffangvorrichtung 200 gemäß der Ausführungsform aus Figur 2 eine Belüftungsöffnung 222 auf. Die Belüftungsöffnung 222 erstreckt sich durch das Gehäuse des Absaugkörpers 202 in den Hohlraum 218. Die Belüftungsöffnung 222 verbindet damit den Hohlraum 218 des Absaugkörpers 202 mit der Umgebungsluft. In der hier dargestellten Ausführungsform erstreckt sich die Belüftungsöffnung 222, insbesondere durch das zweite Ende, d. h. die Oberseite, der Auffangvorrichtung 202. Durch das Vorsehen der Belüftungsöffnung 222, kann Umgebungsluft in den Hohlraum 218 und damit in den Absaugkanal 217 gesogen werden. Hierdurch erhöhen sich die erzielbaren Luftströme signifikant. Es ist demnach möglich, den Bohrschlamm 224 mit den hohen Luftströmen über weitere Strecken bzw. größere Ansaughöhen H zu transportieren. Auch wird hierdurch generell eine bessere Absaugwirkung erzielt.

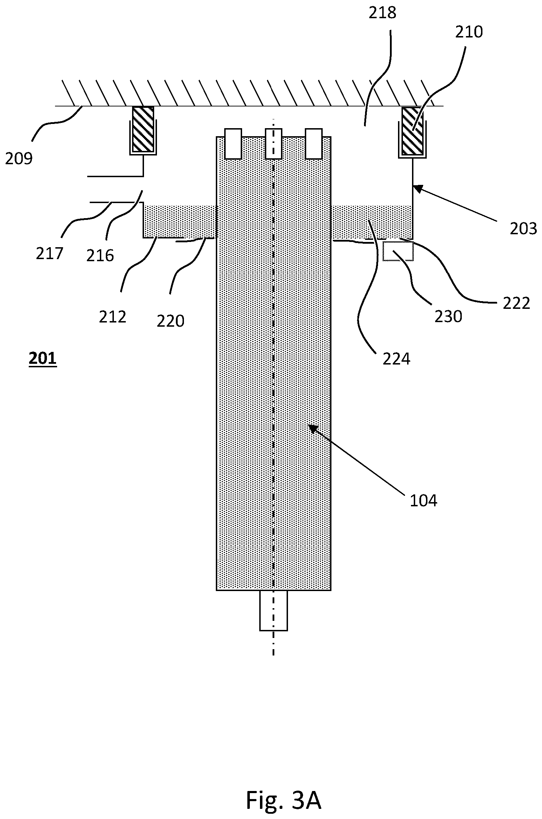

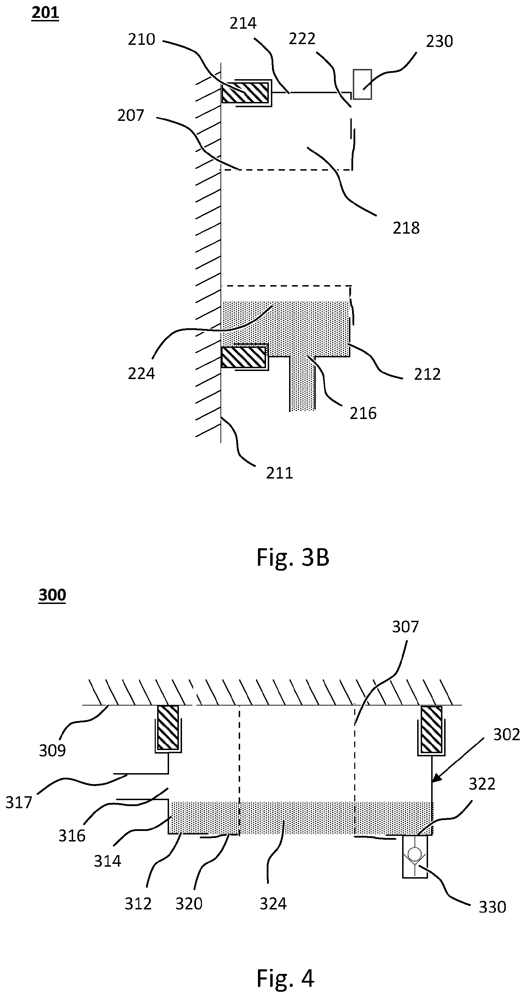

Eine weitere Ausführungsform einer erfindungsgemäßen Auffangvorrichtung 201 ist in den Figu-ren 3A und 3B gezeigt. In den Figuren 3A und 3B sind Bauteile der Auffangvorrichtung, welche identisch mit den Bauteilen der ersten Ausführungsform gemäß Figur 2 sind mit den gleichen Bezugszeichen versehen. In Figur 3A ist eine schematische Schnittdarstellung der Auffangvorrichtung 201 beim Arbeiten über Kopf dargestellt. Mit anderen Worten, in Figur 3A ist die Auffangvorrichtung 201 an einer Decke 209 angebracht. Wie dies später näher erläutert werden wird, kann die Auffangvorrichtung 201 zum Anbringen an der Decke über separate Ansaugkörper verfügen. Alternativ kann die Auffangvorrichtung 201 auch über mechanische Mittel, wie Schrauben oder Bolzen, mit der Decke 209 verbunden werden, um die Dichtungen 210 am zu bearbeiteten Untergrund (Decke 209) zu befestigen.

Auch in Figur 3A ist eine Bohrkrone 104 gezeigt, welche sich durch das zweite Ende 212, d. h. die Oberseite, des Absaugkörpers 203 in den Hohlraum 218 erstreckt. Um Kühlwasser an das vordere Ende der Bohrkrone 104 und somit zur Bearbeitungsstelle zu fördern, wird bei der Arbeit über Kopf die Bohrkrone im Wesentlichen vollständig mit Wasser gefüllt. Wasser, welches überläuft bzw. beim Bohrvorgang von der Decke 209 herabtropft, wird im Hohlraum 218 gesammelt. Die Dichtung 220 verhindert ein Herauslaufen des Bohrschlamms 224 über die Außenseite der Bohrkrone 104.

Die Auffangvorrichtung 201 weist auch in dieser Ausführungsform eine Belüftungsöffnung 222 auf. Da sich die Belüftungsöffnung 222 durch das zweite Ende 212 in den Hohlraum 218 erstreckt, könnte es beim Arbeiten über Kopf zum Herauslaufen von Bohrschlamm aus dem Hohlraum über die Belüftungsöffnung 222 kommen. Aus diesem Grund ist die Belüftungsöffnung 222 der Auffangvorrichtung 201 selektiv zwischen einem geöffneten Zustand in einen geschlossenen Zustand überführbar. Der geschlossene Zustand ist in Figur 3A dargestellt. Ein geöffneter Zustand ist in Figur 3B dargestellt.

In der Ausführungsform gemäß der Figuren 3A und 3B weist die Auffangvorrichtung eine Abdeckung 230 auf. Die Abdeckung 230 kann in einer ersten Position (Figur 3A) die Belüftungsöffnung 222 überdecken und diese somit schließen. In einer zweiten Position (Figur 3B) ist die Abdeckung von der Belüftungsöffnung 222 entfernt, d. h. die Belüftungsöffnung ist geöffnet.

Bei der Abdeckung kann es sich um eine abnehmbare Abdeckung (z.B. Deckel) handeln, der je nach Anwendungsfall mit der Belüftungsöffnung 222 verbunden oder von dieser entfernt werden kann. Alternativ kann es sich bei der Abdeckung um eine Klappe oder jedes andere Ventil handeln, welches dazu dient, die Belüftungsöffnung selektiv zwischen den geöffneten und dem geschlossenen Zustand zu überführen.

In der in Figur 3A dargestellten Anwendungssituation einer Überkopfbohrung verhindert die Abdeckung 230 ein Herauslaufen des Bohrschlamms 224 aus dem Hohlraum 218 der Auffangvorrichtung 201. Durch das Schließen der Belüftungsöffnung 222 wird jedoch auch die Strömungsgeschwindigkeit beim Ansaugen des Bohrschlamms reduziert, da die Verbindung zur Umgebungsluft unterbrochen wird. Dies ist jedoch bei Überkopfbohrungen, beispielsweise Bohrungen an der Decke, nicht problematisch, da sich der Absaugkörper 203 der Auffangvorrichtung über der Aufbereitungsvorrichtung befindet und der Bohrschlamm dementsprechend auch mit sehr geringen Luftströmen absaugen lässt.

Die Figur 3B zeigt die Auffangvorrichtung 201 im Anwendungsfall einer Wandbohrung. In diesem Anwendungsbeispiel ist die Auffangvorrichtung 201 über die Dichtungen 210 an einer Wandoberfläche 211 angebracht. Der besseren Übersicht halber ist die Bohrkrone in Figur 3B nicht mehr dargestellt. Lediglich die Bohröffnung 207 ist schematisch dargestellt und zeigt die Abbildung zwischen Außen Oberfläche der Bohrkrone und dem Hohlraum 218. Die Auffangvorrichtung 201 ist in Figur 3B derart angeordnet, dass sich die Absaugöffnung 216 an einem unteren Endbereich der Seitenwand 214 des Absaugkörpers befindet. Dementsprechend sammelt sich auch der Bohrschlamm 224 im unteren Bereich der Auffangvorrichtung 201 und kann über die Schwerkraft abgesaugt werden. Gemäß dieser Ausführungsform muss die Belüftungsöffnung 222 nicht abgedeckt werden. Die Abdeckung 230 ist dementsprechend in ihrer geöffneten Stellung gezeigt und ermöglicht ein Ansaugen von Umgebungsluft über die Belüftungsöffnung 222. Dies ist insbesondere dann hilfreich, wenn die Auffangvorrichtung 201 unterhalb der Aufbereitungsvorrichtung an der Wand angebracht ist.

Die Figur 4 zeigt eine schematische Schnittdarstellung einer weiteren Ausführungsform der Auffangvorrichtung gemäß der vorliegenden Erfindung. Die Auffangvorrichtung 300 gemäß Figur 4 entspricht im Wesentlichen der Ausführungsform gemäß Figur 2. Insbesondere weist auch die Auffangvorrichtung 300 einen Absaugkörper 302 mit einer Absaugöffnung 316 und einer Belüftungsöffnung 322 auf. Die Absaugöffnung 316 ist in einer Seitenwand 314 des Absaugkörpers 302 angeordnet. Die Belüftungsöffnung 322 ist an einem zweiten Ende 312, d. h. an einer Oberseite, des Absaugkörpers 302 angeordnet. Eine Bohröffnung 307 wird durch eine an der Oberseite angeordnete Dichtung 320 abgeschlossen.

In der in Figur 4 dargestellten Ausführungsform ist die Auffangvorrichtung 300 an einer Deckenoberfläche 309 befestigt. Ähnlich der Ausführungsform in Figur 3A sammelt sich Bohrschlamm 324 am zweiten Ende 312, d. h. in Richtung der Oberseite, der Auffangvorrichtung 302. Um ein Herauslaufen des Bohrschlamms über die Belüftungsöffnung 322 zu verhindern, ist in der Ausführungsform gemäß Figur 4 ein Einwegventil 330 vorgesehen. Beispielsweise kann es sich bei dem Einwegventil 330 um ein Lippenventil handeln.

Das Einwegventil 330 verhindert ein Auslaufen von Bohrschlamm 324 über die Belüftungsöffnung 322. Gleichzeitig ermöglicht das Einwegventil 330 Umgebungsluft in den Hohlraum des Absaugkörpers 302 einzusaugen, um die Absaugung des Bohrschlamms 324 zu begünstigen.

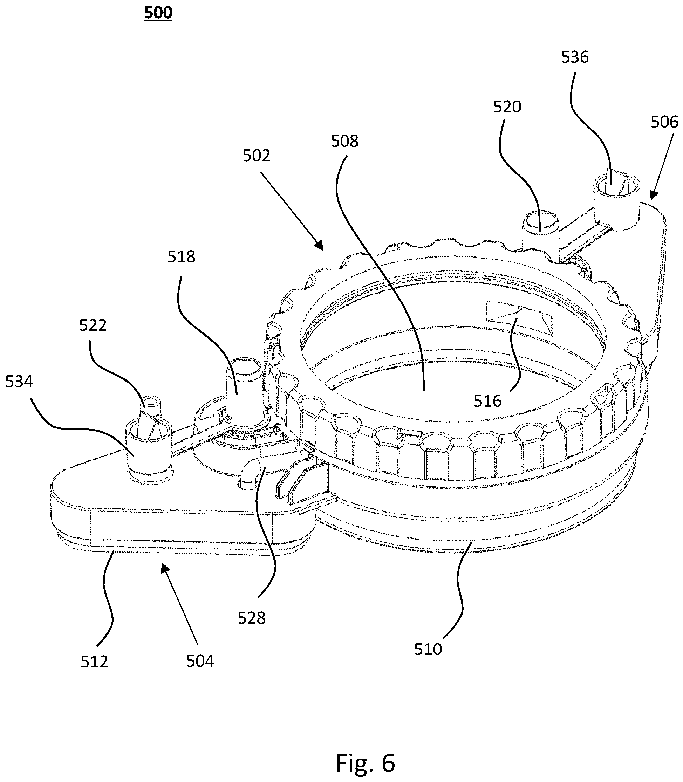

Das Einwegventil 330 kann die in den Figuren 3A und 3B gezeigten Abdeckung ersetzen. In einer alternativen Ausführungsvariante kann das Einwegventil Teil einer entfernbaren Abdeckung sein, wie dies in Figur 6 gezeigt ist.

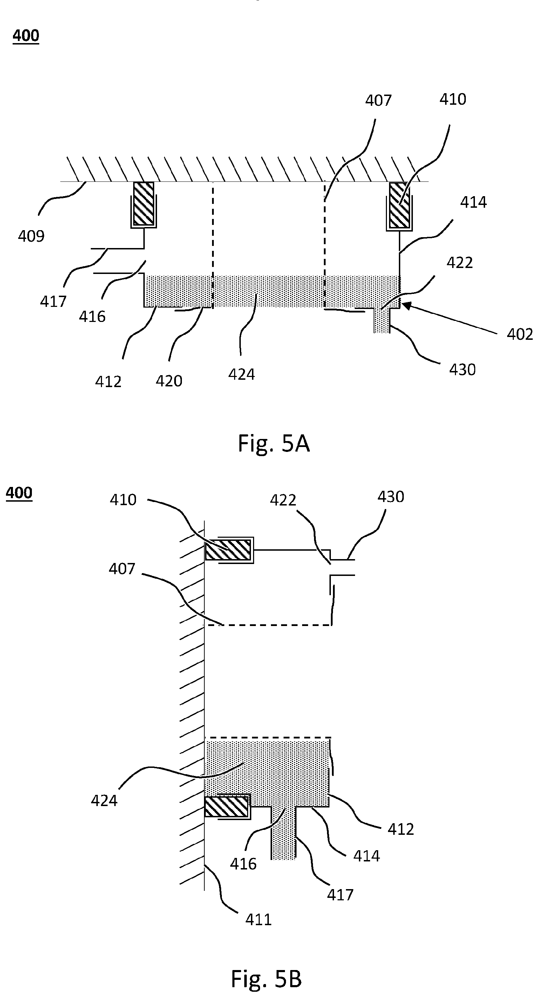

Die Figuren 5A und 5B zeigen eine weitere Ausführungsform der vorliegenden Erfindung. Die Figur 5A zeigt eine schematische Schnittdarstellung einer Auffangvorrichtung 400, welche an einer Deckenoberfläche 409 angeordnet ist. Figur 5B zeigt die Auffangvorrichtung 400 an einer Wandoberfläche 411.

Insbesondere weist auch die Auffangvorrichtung 400 einen Absaugkörper 402 mit einer Absaugöffnung 416 und einer Belüftungsöffnung 422 auf. Die Absaugöffnung 416 ist in einer Seitenwand 414 des Absaugkörpers 402 angeordnet. Die Belüftungsöffnung 422 ist an einem zweiten Ende 412, d. h. an einer Oberseite, des Absaugkörpers 402 angeordnet. Eine Bohröffnung 407 wird durch eine an der Oberseite angeordnete Dichtung 420 abgeschlossen.

Im Ausführungsbeispiel gemäß der Figuren 5A und 5B ist die Belüftungsöffnung 422, als eine zweite Absaugöffnung ausgebildet. Die erste Absaugöffnung 416 dient dabei, je nach Anwendungsfall, als zweite Belüftungsöffnung. Insbesondere sind die beiden Öffnungen 416, 422 jeweils mit einem Saugstutzen 417, 430 verbunden. Die Saugstutzen 417, 430 dienen jeweils zum Anschließen eines Saugschlauchs, welcher die jeweiligen Öffnungen 416, 422 mit einer Aufbereitungsvorrichtung verbindet.

Im Anwendungsfall gemäß Figur 5A, d.h. wenn die Auffangvorrichtung 400 an einer Deckenoberfläche 409 angeordnet ist, dient die zweite Öffnung 422 des Absaugkörpers als Absaugöffnung. In diesem Fall wird der zweite Saugstutzen 430 mit dem Saugschlauch verbunden. Der erste Ansaugstutzen 417 ist nicht mit einem Saugschlauch verbunden. Vielmehr verbinden die erste Öffnung 416 und der erste Saugstutzen 417 den Hohlraum des Absaugkörpers 402 mit der Umgebungsluft, um ein Absaugen zu begünstigen.

Da der Bohrschlamm 424 durch die Schwerkraft nach unten, d. h. in Richtung des zweiten Endes 412 des Absaugkörpers, verläuft, kann dieser effektiv über die am zweiten Ende 112 angeordnete, zweite Öffnung 422 abgesaugt werden. Der Bohrschlamm 424 läuft nicht aus der horizontal ausgerichteten ersten Öffnung 416 bzw. dem Saugstutzen 417, weshalb kein Ventil bzw. keine Abdeckung der ersten Öffnung 416 bzw. des ersten Saugstutzens 417 notwendig ist.

Figur 5B zeigt die Auffangvorrichtung 400 bei einer Wandbohrung. Die Auffangvorrichtung 400 ist mit ihrer Dichtung 410 an einer Wandoberfläche 411 befestigt. Im Anwendungsfall gemäß Figur 5B ist der Saugschlauch der Aufbereitungsvorrichtung mit dem ersten Saugstutzen 417 der Öffnung 416 verbunden. Der zweite Saugstutzen 430 der Öffnung 422 ist in diesem Anwendungsbeispiel nicht mit einem Saugschlauch verbunden und bleibt frei. Demnach ist der Hohlraum der Auffangvorrichtung 400 über die Öffnung 422 mit der Umgebungsluft verbunden. Mit anderen Worten, die zweite Öffnung 422 dient in diesem Anwendungsbeispiel als Belüftungsöffnung, während die erste Öffnung 416 in diesem Beispiel als Absaugöffnung dient.

In den Figuren 5A und B kommt beiden Öffnungen 416, 422 eine doppelte Funktion zu, welche sich je nach Anwendungssituation ändert. Dabei ist die Funktion der Öffnungen 416, 422 jeweils gegensätzlich zur Funktion der anderen Öffnung 416, 422. Beispielsweise dient die erste Öffnung 416 als Belüftungsöffnung, wenn die zweite Öffnung 422 als Absaugöffnung verwendet wird und vice versa.

Die Figur 6 zeigt eine perspektivische Ansicht von oben auf eine weitere Ausführungsform einer Auffangvorrichtung 500 gemäß der vorliegenden Erfindung. Die Auffangvorrichtung 500 weist einen Absaugkörper 502 auf. In der hier dargestellten Ausführungsform ist der Absaugkörper insbesondere ringförmig ausgebildet. Eine Bohröffnung 508 erstreckt sich durch den Absaugkörper 502. Die Bohröffnung 508 ist dazu ausgebildet, eine Bohrkrone eines Kembohrgeräts aufzunehmen. Dementsprechend ist der Durchmesser der Bohröffnung 508 auf den Durchmesser der Bohrkrone angepasst. Mit anderen Worten, die Auffangvorrichtung der vorliegenden Erfindung kann Absaugkörper mit unterschiedlich großen Bohröffnungen aufweisen, welche jeweils auf die zu verwendende Bohrkrone zugeschnitten ist.

In der hier dargestellten Ausführungsform weist die Auffangvorrichtung 500 zwei Ansaugkörper 504, 506 auf. Die beiden Ansaugkörper 504, 506, sind mit dem Absaugkörper 502 verbunden. Insbesondere sind die beiden Ansaugkörper 504, 506 fest mit dem Absaugkörper 502 verbunden. Die Ansaugkörper 504, 506 können nicht relativ zum Absaugkörper 502 bewegt werden.

Gemäß der Ausführungsform in Figur 6 weisen die Ansaugkörper 504, 506 eine im Wesentlichen identische Form auf. Insbesondere handelt es sich hierbei um eine Dreiecksform.

Der Absaugkörper 502 weist eine erste Dichtung 510 auf. Die erste Dichtung 510 des Absaugkörpers 502 ist auf einer Unterseite des Absaugkörpers 502 angeordnet. Sie dient dazu, eine dichtende Verbindung mit der zu bearbeitenden Oberfläche (zum Beispiel Wand- oder Deckenoberfläche) herzustellen. Zusammen mit der zu bearbeitenden Oberfläche bildet der Absaugkörper 502 einen Hohlraum aus, welcher sich um die Bohröffnung 508 erstreckt. Der Hohlraum wird durch die erste Dichtung 510 gegenüber der zu bearbeitenden Oberfläche abgedichtet, um ein Herauslaufen des Kühlwassers bzw. Bohrschlamms aus dem Inneren des Absaugkörpers 502 zu verhindern.

Der erste Ansaugkörper 504 weist eine zweite Dichtung 512 auf. Die zweite Dichtung 512 dient dazu, einen im Inneren des ersten Ansaugkörpers 504 ausgebildeten Hohlraum gegenüber der zu bearbeitenden Oberfläche abzudichten. Zusammen mit der zu bearbeitenden Oberfläche wird durch den Hohlraum ein erster Vakuumraum ausgebildet. Der erste Vakuumraum dient dazu, die Auffangvorrichtung 500 über einen Unterdruck an der zu bearbeitenden Oberfläche zu befestigen.

Der zweite Ansaugkörper 504 weist eine dritte Dichtung (nicht gezeigt) auf. Die dritte Dichtung dient dazu, einen im Inneren des zweiten Ansaugkörpers 506 ausgebildeten Hohlraum gegenüber der zu bearbeitenden Oberfläche abzudichten. Zusammen mit der zu bearbeitenden Oberfläche wird durch den Hohlraum ein zweiter Vakuumraum ausgebildet. Der zweite Vakuumraum dient dazu, die Auffangvorrichtung 500 über einen Unterdruck an der zu bearbeitenden Oberfläche zu befestigen.

Der erste Ansaugkörper 504 weist einen Vakuumanschluss 522 auf. Der Vakuumanschluss 522 ist in der hier dargestellten Ausführungsform auf einer der ersten Dichtung 512 gegenüberliegenden Seite des ersten Ansaugkörpers 504 angeordnet. Mit anderen Worten, der Vakuumanschluss 522 ist auf der Oberseite des ersten Ansaugkörpers 504 angeordnet.

Der Vakuumraum des ersten Ansaugkörpers 504 ist über einen in Figur 6 angedeuteten Luftkanal 528 mit dem Vakuumraum des zweiten Ansaugkörpers 506 verbunden. Die Vakuumräume der beiden Ansaugkörper 504, 506 sind strömungstechnisch vom Hohlraum des Ansaugkörpers 502 getrennt. Dies wird insbesondere durch die separaten Dichtungen 510, 512, 514 erreicht. Ein Übertritt von Kühlwasser bzw. Bohrschlamm oder Staub aus dem Hohlraum des Absaugkörpers 502 in den Vakuumraum der Ansaugkörper 504, 506 ist somit ausgeschlossen. Die Ansaugkörper 504, 506 dienen ausschließlich zum Halten der Auffangvorrichtung 500 an der zu bearbeitenden Oberfläche. Dagegen dient der Absaugkörper 502 ausschließlich dazu, Bohrschlamm oder Staub, welcher während der Bohrung anfällt, aufzufangen und an eine oben bereits beschriebene Aufbereitungsvorrichtung abzuführen.

Zum Befestigen der Auffangvorrichtung 500 an der zu bearbeitenden Oberfläche (zum Beispiel Wand- bzw. Deckenoberfläche), wird ein Unterdruck innerhalb der Vakuumräume der Ansaugkörper 504, 506 erzeugt. Zur Erzeugung des Unterdrucks wird ein Vakuumschlauch an dem Vakuumanschluss 522 des ersten Ansaugkörpers 504 befestigt. Über den Vakuumanschluss 522 kann somit ein Unterdruck im ersten Vakuumraum erzeugt werden. Wie oben bereits erwähnt, ist der erste Vakuumraum über einen Luftkanal mit dem zweiten Vakuumraum des zweiten Ansaugkörpers 506 verbunden. Ein Teil des Luftkanals 528 ist in Figur 6 dargestellt. Ein anderer, nicht dargestellter Teil des Luftkanals wird vorzugsweise zumindest in den Absaugkörper 502 integriert.

Durch den Luftkanal zwischen den Vakuumräumen der beiden Ansaugkörper 504, 506 kann ein Unterdruck in beiden Vakuumräumen mit einem einzigen Sauganschluss 522 erzielt werden. Die Luft in den Vakuumräumen wird also über den Sauganschluss 522 zu einer entsprechenden Vakuumpumpe gefördert. Die Vakuumpumpe kann Teil der Aufbereitungsvorrichtung sein. Alternativ kann es sich bei der Vakuumpumpe auch um eine separate Vorrichtung handeln.

Zum Absaugen des Bohrschlamms bzw. Staubs aus dem Hohlraum des Absaugkörpers 502 ist wenigstens eine Absaugöffnung 516 im Hohlraum vorgesehen. In der in Figur 6 dargestellten Ausführungsform sind zwei Absaugöffnungen (lediglich zweite Absaugöffnung 516 dargestellt) vorgesehen. Eine erste Absaugöffnung erstreckt sich durch die Innenwand des Hohlraums des Absaugkörpers 502 in Richtung eines ersten Absaugkanals. Die zweite Absaugöffnung 516 erstreckt sich durch die Innenwand des Hohlraums in Richtung eines zweiten Absaugkanal. In der Figur 6 enden die Absaugkanäle in Saugstutzen 518, 250. Ein erster Saugstutzen 518 ist mit einer ersten Absaugöffnung (nicht dargestellt) verbunden. Ein zweiter Saugstutzen 520 ist mit der zweiten Absaugöffnung 516 verbunden.

Die Saugstutzen 518, 520 können dazu verwendet werden, einen Saugschlauch der Aufbereitungsvorrichtung anzuschließen. Somit kann über die beiden Saugstutzen 518, 250 Bohrschlamm bzw. Staub aus dem Hohlraum gesaugt und zur Aufbereitungsvorrichtung gefördert werden. Im Betrieb ist es sinnvoll, dass jeweils nur einer der beiden Saugstutzen 518, 250 mit der Aufbereitungsvorrichtung verbunden wird. Der andere Saugstutzen bleibt offen. Der offene Saugstutzen dient als Belüftungsöffnung, durch welche das Absaugen des Bohrschlamms bzw. Staubs aus dem Hohlraum begünstigt wird.

In der Ausführungsform gemäß der Figur 6 überlappt der erste Saugstutzen 518 den ersten Ansaugkörper 504. Der zweite Saugstutzen 520 überlappt den zweiten Ansaugkörper 506. Die Absaugöffnungen erstrecken sich in Richtung des ersten bzw. zweiten Ansaugkörpers 506. Dies ist insbesondere deshalb vorteilhaft, da einer der beiden Ansaugkörper 504, 506 bei der Verwendung in Wandeckenbereichen senkrecht unterhalb des Absaugkörpers 502 zum Liegen kommt. Durch die beiden Absaugöffnungen wird somit sichergestellt, dass, bei jeder Orientierung der Auffangvorrichtung 500 in den Wandbereichen, der Bohrschlamm in eine der beiden Absaugöffnungen herunterläuft.

Die Auffangvorrichtung 500 weist ein erstes entfernbares Einwegventil 534 auf. Das erste Einwegventil 534 kann selektiv mit dem ersten Saugstutzen 518 verbunden oder von diesen entfernt werden. In Figur 6 ist das erste Einwegventil 534 vom ersten Saugstutzen 518 entfernt.

Die Auffangvorrichtung 500 weist ein zweites entfernbares Einwegventil 536 auf. Das zweite Einwegventil 536 kann selektiv mit dem zweiten Saugstutzen 520 verbunden oder von diesen entfernt werden. In Figur 6 ist das zweite Einwegventil 536 vom zweiten Saugstutzen 520 entfernt. Im Betrieb ist jeweils einer der beiden Saugstutzen 518, 520 mit seinem Einwegventil 534, 536 verbunden.

Im Betrieb kann der Benutzer frei wählen, welchen der beiden Saugstutzen 518, 520 er mit der Aufbereitungsvorrichtung verbindet, d. h. auf welchen Saugstutzen 518, 520 der Saugschlauch montiert wird. Der andere Saugstutzen 518, 520 dient dabei als Belüftungsöffnung. Dieser als Belüftungsöffnung verwendete Saugstutzen wird demnach mit dem Einwegventil 534 bzw. 536 verbunden, um ein Herauslaufen von Bohrschlamm aus der Belüftungsöffnung zu verhindern.

Die Ausführungsform gemäß Figur 6 ist ein Beispiel für eine besonders einfache Ausgestaltung der Auffangvorrichtung mit Belüftungsöffnung und Saugstutzen. Dabei kann der Benutzer frei wählen, welchen der beiden Saugstutzen 518, 520 er mit der Aufbereitungsvorrichtung verbindet. Dies ist insbesondere bei schwer zugänglichen Arbeitsstellen, wie beispielsweise Wandecken bzw. -kanten von Vorteil, da der besser zugängliche Saugstutzen zum Anschluss an die Auffangvorrichtung verwendet werden kann. Vorzugsweise kann derjenige Saugstutzen 518, 520 mit der Aufbereitungsvorrichtung verbunden werden, der sich unterhalb der Bohröffnung 508 befindet. Hierdurch wird die Absaugung von Bohrschlamm weiter begünstigt.

Die vorliegende Erfindung ist nicht auf die in den Ausführungsformen dargestellten Merkmalskombinationen beschränkt, sondern ergibt sich aus einer Kombination sämtlicher hierin offenbarter Merkmale.

### Bezugszeichenliste

- 100: Kernbohrsystem
- 104: Bohrkrone
- 106: Wasseranschluss
- 200, 300, 400, 500: Auffangvorrichtung
- 202, 203, 302, 402, 502: Absaugkörper
- 207, 307, 407: Bohröffnung
- 208: Bodenoberfläche
- 209, 309, 409: Deckenoberfläche
- 210: Dichtung
- 211, 411: Wandoberfläche
- 212, 312, 412: zweites Ende
- 214, 314, 414: Seitenwand
- 216, 316, 416: Absaugöffnung
- 217, 317, 417: erster Absaugstutzen
- 218: Hohlraum
- 220, 320, 420: Dichtung
- 222, 322, 422: Belüftungsöffnung
- 224, 324, 424: Bohrschlamm
- 230: Abdeckung
- 330: Einwegventil
- 430: zweiter Absaugstutzen
- 504, 506: Ansaugkörper
- 508: Bohröffnung
- 510, 512, 514: Dichtung
- 518: erster Ansaugstutzen
- 520: zweiter Ansaugstutzen
- 522: Vakuumanschluss
- 528: Luftkanal
- 534, 536: Einwegventil

## Patentansprüche

1. Auffangvorrichtung (200) zum Auffangen von Bohrschlamm (224) oder Staub, der bei Betrieb eines Kernbohrgeräts entsteht, wobei die Auffangvorrichtung (200) folgendes aufweist:
- einen Absaugkörper (202) mit einer Bohröffnung (207), welche sich durch den Absaugkörper (202) erstreckt und dazu ausgebildet ist eine Bohrkrone aufzunehmen, wobei der Absaugkörper (202) einen Hohlraum aufweist, welcher sich zumindest teilweise um die Bohröffnung (207) erstreckt;
- eine erste Absaugöffnung (216), welche an einer Innenwand des Hohlraums angeordnet ist und dazu dient Bohrschlamm (224) oder Staub aus dem Hohlraum abzusaugen, wobei die erste Absaugöffnung (216) über einen ersten Absaugkanal mit einer Aufbereitungsvorrichtung verbindbar ist; und
- eine Belüftungsöffnung (222), welche sich durch den Absaugkörper (202) in den Hohlraum erstreckt und diesen mit der Umgebungsluft verbindet.

2. Auffangvorrichtung (200) nach Anspruch 1,
wobei die Belüftungsöffnung (222) als eine zweite Absaugöffnung ausgebildet ist, die dazu dient Bohrschlamm (224) oder Staub aus dem Hohlraum abzusaugen, wobei die zweite Absaugöffnung über einen zweiten Absaugkanal mit einer Aufbereitungsvorrichtung verbindbar ist.

3. Auffangvorrichtung (200) nach Anspruch 2 oder 3,
wobei der Absaugkörper (202) einen ersten Saugstutzen (218) aufweist, welcher dazu dient einen Saugschlauch einer Aufbereitungsvorrichtung anzuschließen, wobei der erste Saugstutzen (218) strömungstechnisch mit dem ersten Absaugkanal verbunden ist.

4. Auffangvorrichtung (200) nach 3,
wobei der Absaugkörper (402) einen zweiten Saugstutzen (430) aufweist, welcher dazu dient einen Saugschlauch einer Aufbereitungsvorrichtung anzuschließen, wobei der zweite Saugstutzen (430) strömungstechnisch mit dem zweiten Absaugkanal verbunden ist.

5. Auffangvorrichtung (200) nach Anspruch 4,
wobei der erste Saugstutzen (534) in seiner Form im Wesentlichen identisch zur Form des zweiten Saugstutzens (536) ausgebildet ist.

6. Auffangvorrichtung (200) nach einem der Ansprüche 1 bis 5,
wobei die Belüftungsöffnung (222) selektiv zwischen einem geöffnet Zustand und einem geschlossenen Zustand überführbar ist.

7. Auffangvorrichtung (200) nach Anspruch 6,
wobei die Auffangvorrichtung (200) eine vorzugsweise abnehmbare Abdeckung (230) aufweist, welche dazu ausgebildet ist, die Belüftungsöffnung (222) zwischen dem geöffneten und dem geschlossenen Zustand zu überführen.

8. Auffangvorrichtung (300) nach einem der Ansprüche 1 bis 7,
wobei die Belüftungsöffnung (322) ein Einwegventil (330) aufweist, welches ein Einströmen von Fluiden in den Hohlraum ermöglicht und ein Ausströmen von Fluiden aus dem Hohlraum verhindert.

9. Auffangvorrichtung (200) nach Anspruch 8 in Kombination mit Anspruch 7 wobei das Einwegventil Teil der Abdeckung ist.

10. Auffangvorrichtung (200) nach einem der Ansprüche 1 bis 9,
wobei die erste Absaugöffnung (216) als eine alternative, zweite Belüftungsöffnung ausgebildet ist, welche sich durch den Absaugkörper (202) in den Hohlraum erstreckt und diesen mit der Umgebungsluft verbindet.

11. Auffangvorrichtung (200) nach einem der Ansprüche 1 bis 10,
wobei die Belüftungsöffnung (222) auf einer der zu bearbeitenden Oberfläche (208, 209, 211) abgewandten Seite der Auffangvorrichtung angeordnet ist.

12. Auffangvorrichtung (200) nach einem der Ansprüche 1 bis 11,
wobei die Auffangvorrichtung eine Unterseite, welche mit der zu bearbeitenden Oberfläche (208, 209, 211) verbindbar ist, und eine Oberseite, welche der Unterseite gegenüberliegt, aufweist, wobei die Auffangvorrichtung wenigstens eine Seitenwand (214) aufweist, welche die Oberseite mit der Unterseite verbindet, und wobei die erste Absaugöffnung (216) in der Seitenwand (214) vorgesehen ist.

13. Auffangvorrichtung (500) nach einem der Ansprüche 1 bis 12,
wobei die Auffangvorrichtung wenigstens einen Ansaugkörper (504, 506) aufweist, welcher mit dem Absaugkörper (502) verbunden und dazu ausgebildet ist einen Vakuumraum zusammen mit einer Oberfläche auszubilden, wobei der Vakuumraum des Ansaugkörpers (504, 506) strömungstechnisch vom Hohlraum des Absaugkörpers (502) getrennt ist.

14. Auffangvorrichtung (200) nach einem der Ansprüche 1 bis 13,
wobei der Absaugkörper (202) im Wesentlichen ringförmig ausgebildet ist.

15. Auffangvorrichtung (200) nach einem der Ansprüche 1 bis 14,
wobei der Absaugkörper (202) eine Dichtung (210) zum Abdichten des Hohlraums gegenüber der Oberfläche aufweist.
